# EUROPÄISCHE PATENTSCHRIFT

(11) **EP 2 084 789 B1**
(45) Veröffentlichungstag und Bekanntmachung des Hinweises auf die Patenterteilung: **06.03.2013**
(21) Anmeldenummer: 07856178.4
(22) Anmeldetag: 14.11.2007
(51) Int. Cl.: H01R 39/48, H02K 9/28

(54) **SCHLEIFKONTAKTANORDNUNG MIT ABRIEBENTFERNUNG**
SLIDING CONTACT ARRANGEMENT WITH WEAR ELIMINATION
ENSEMBLE CONTACT FROTTANT AVEC ÉLIMINATION DE LA MATIÈRE ABRASÉE

(30) Priorität: 14.11.2006 US 559756
(43) Veröffentlichungstag der Anmeldung: 05.08.2009
(73) Patentinhaber: Schleifring und Apparatebau GmbH, 82256 Fürstenfeldbruck (DE)
(72) Erfinder: SCHILLING, Harry, 85072 Eichstätt (DE)
(74) Vertreter: Lohr, Georg
(86) Internationale Anmeldenummer: PCT/EP2007/009839
(87) Internationale Veröffentlichungsnummer: WO 2008/058721

(56) Entgegenhaltungen:
- US-A- 4 966 555
- US-A- 5 296 772
- US-A1- 2002 047 470
- US-A1- 2004 100 159
- US-A1- 2006 175 925

## Beschreibung

### Technisches Gebiet

Die Erfindung bezieht sich auf eine Schleifkontaktanordnung und insbesondere ein System zur Entfernung von Partikeln und Abrieb, die durch die Bewegung eines Schleifkontakts entlang einer Kontaktbahn entstehen. Schleifkontaktanordnungen werden zur elektrischen Verbindung und insbesondere zur Übertragung von Signalen zwischen gegeneinander beweglichen Einheiten verwendet. Eine Bürste steht hier im elektrischen Kontakt zu einer Schleifbahn und kann gegenüber dieser bewegt werden. Grundsätzlich kann diese entsprechend der Anordnung der Bahn lineare oder aber Drehbewegungen ausführen. Der Begriff Bürstenelement oder Bürste steht hier für jeden bürstenförmigen, drahtförmigen oder stiftförmigen Kontakt, der aus Metall, leitenden Kunststoffen, Kohlematerialien und anderem, aus dem Stand der Technik bekannten Materialien bestehen kann. Wesentlich ist, dass er zumindest eine minimale elektrische Leitfähigkeit aufweist. Die Schleifbahn besteht meistens aus einem Metall, wie Messing oder Edelstahl. Sie kann aber auch aus anderen Materialien, beispielsweise Widerstandsmaterialien gefertigt sein. Durch die mechanische Bewegung zwischen der Bürste und der Schleifbahn werden kleine Partikel abgeschliffen. Da diese Partikel von den Kontaktmaterialien der Bürste bzw. der Schleifbahn stammen, sind sie meistens gut leitend. Diese Partikel bilden einen feinen Staub, der sich auf die Isolation der Schleifkontaktanordnung und anderen Bauteilen absetzt. Dadurch werden im Laufe der Zeit die Isolationseigenschaften erheblich verschlechtert. Dies kann schließlich zu Durchschlägen und Abbrand der Isolation führen. Ebenso kann dies zu einer Fehlfunktion oder Beschädigung von anderen Teilen, insbesondere von elektrischen oder elektronischen Komponenten führen. Um dies zu vermeiden muss eine regelmäßige Wartung, häufig in relativ kurzen Intervallen, durchgeführt werden. Derartige Wartungen sind zeit- und kostenintensiv, da der fest anhaftende Staub auch aus kleinsten Vertiefungen der Anordnung entfernt werden muss.

### Stand der Technik

Ein Schleifringsystem für Computertomografen ist in der JP 06 005 340 offenbart. Die Übertragung elektrischer Energie erfolgt mittels einer Bürste, die entlang einem Ring läuft. Eine separat angeordnete Staubentfernungseinheit umfasst einen Staubsammelbehälter und eine Röhre, durch die der Staub abgesaugt werden kann.

Ein Schleifringsystem für Computertomografen, wie es beispielsweise in der DE 10 543 383 B4 offenbart ist, weist eine Schleifbahn mit einer darauf laufenden Bürste sowie eine Abriebsammeleinrichtung auf. Diese Abriebsammeleinrichtung kann elektrostatisch aufgeladen werden. Es hat sich gezeigt, dass diese Anordnung insbesondere bei Computertomografen neueren Datums mit erhöhter Strombelastung der Schleifbahnen und somit einer erhöhten Bürstenzahl nicht mehr in der Lage ist, den anfallenden Abrieb aufzunehmen.

In der US 2006/175925 A1 ist ein Elektromotor offenbart, bei dem sich in einem Hohlraum innerhalb des Statorgehäuses Bürstenabrieb ansammeln kann.

Die US 4,966,555 A offenbart einen druckluftgespülten Sicherheitskontakt. Durch diese Druckluft soll das Eindringen von explosiven Gasen verhindert werden.

In der US 2002/047470 ist ein Elektromotor mit einer Schleifkontaktanordnung offenbart, welche von einem Gehäuse umschlossen ist. Dieses hat zwei unterschiedliche Austrittsöffnungen für Partikel und Kühlluft.

In der US 2004/100159 A1 ist eine Vorrichtung zur Reinigung und Kühlung der Kollektoren einer Hochspannungsmaschine offenbart.

### Darstellung der Erfindung

Eine erfindungsgemäße Lösung dieser Aufgabe ist in den unabhängigen Patentansprüchen angegeben. Weiterbildungen der Erfindung sind Gegenstand der abhängigen Ansprüche.

Die Aufgabe der Erfindung besteht darin, eine Schleifkontaktanordnung weiter zu verbessern, um Abrieb und Verschmutzungen, die insbesondere durch das Schleifen der Bürste auf der Schleifbahn entstehen, zu sammeln und somit eine stärke Verschmutzung der Umgebung zu vermeiden. Weiterhin sollen durch die erfindungsgemäße Vorrichtung die Wartungsintervalle verlängert werden.

Die erfindungsgemäße Vorrichtung umfasst eine Schleifkontaktanordnung mit wenigstens einer Schleifbahn, einem Bürstenhalter zur Aufnahme wenigstens einer Bürste, welche in mechanischem Eingriff und elektrischem Kontakt mit der Schleifbahn angeordnet ist. Weiterhin ist ein Sammelbehälter zur Aufnahme von Abriebpartikeln und anderen Materialien von der wenigstens einen Bürste bzw. der wenigstens einen Schleifbahn vorgesehen. Weiterhin ist eine Abdeckung vorgesehen, die im Wesentlichen einen Bürstenhalter und die wenigstens eine Bürste umfasst. Die Abdeckung hat Wände, die sich parallel zum Verlauf der Schleifbahn erstrecken und diese seitlich zusammen mit dem Bürstenblock und der wenigstens einen Bürste umschließen. Bei großen Schleifkontaktanordnungen wird durch die Abdeckung nicht die gesamte Schleifbahn in ihrer Länge, sondern nur ein Segment, welches vorzugsweise der Länge der auf der Schleifbahn laufenden Bürstenanordnung entspricht, umschlossen. Ein Sammelbehälter ist an einer Seite der Abdeckung vorgesehen, so dass die durch die Bewegung entstehende Luftströmung in diesen Sammelbehälter hineingeleitet wird.

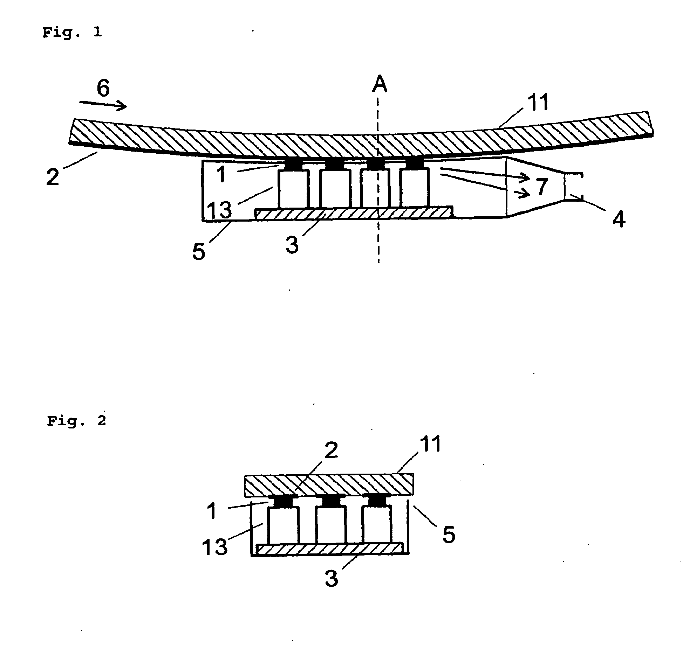

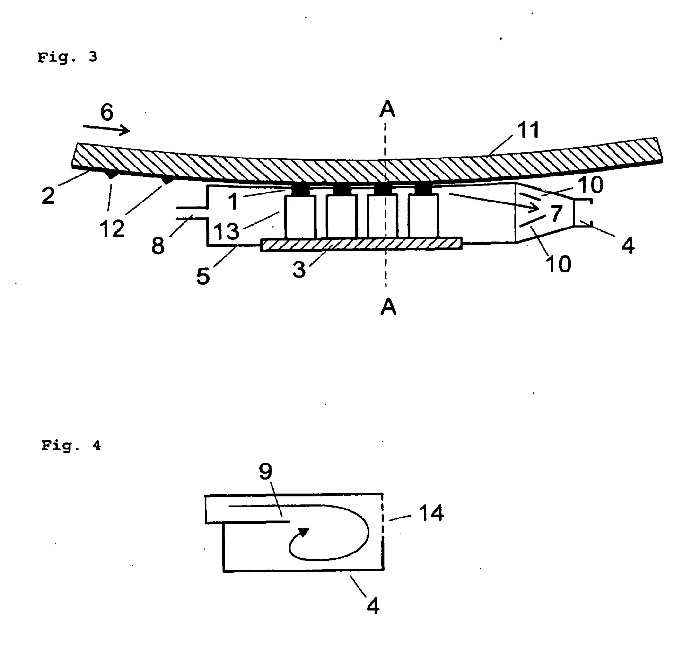

Gemäß der Erfindung ist eine Abdeckung 5 oder auch ein Schutzgehäuse um diejenigen Teile der Schleifkontaktanordnung angebracht, in denen Abrieb produziert und verteilt wird. Diese Teile sind die Kontaktflächen der Schleifbürsten 1 in Verbindung mit den Schleifbahnen 2. Weiterhin ist eingeschlossen ein Stück der stromabwärts liegenden Seite dieser Oberflächen. Wenn die Schleifbahn 2 gegenüber der Schleifbürste 1 bewegt wird, wird das abgeriebene Material in den umgebenden Raum abgegeben und hauptsächlich durch den Luftstrom in Richtung des Pfeils 7 weiter getragen. Dies ist in den Fig. 1 und 3 veranschaulicht. Ein Sammelbehälter 4 ist stromabwärts der Kontaktpunkte zwischen den Schleifbürsten 1 und den Schleifbahnen 2 angeordnet, um das abgeriebene Material aufzufangen. Wenn die Schleifbahn 2 schnell bewegt wird, wie dies beispielsweise in Schleifringen, die in Computertomographen eingesetzt werden, der Fall ist, so wird hierdurch ein Luftstrom erzeugt, der entlang der Oberfläche der Schleifbahn 2 verläuft. Die Abdeckung 5 zur Abdeckung der Schleifkontaktanordnung übernimmt hier gleichzeitig die Funktion eines Luftführungskanals. Dieser führt den Luftstrom, der die Abriebpartikel trägt, in den Sammelbehälter 4. Durch das Sammeln des Materials wird die Menge des in die Umgebung der Schleifkontaktanordnung verteilten Abriebmaterials reduziert. Um den Luftstrom durch die Bewegung der Schleifbahn 2 zu verbessern bzw. zu erhöhen, können erfindungsgemäß Flügel 12 vorgesehen sein. Diese sind vorzugsweise an dem Träger 11, welcher die Schleifbahnen 2 trägt, angebracht. Der Sammelbehälter kann auch über weitere Luftführungselemente, wie wenigstens ein Rohr, oder ein Schlauch mit der Abdeckung verbunden sein.

Weiterhin ist es möglich, den Luftstrom durch die Abdeckung 5 zu erhöhen, indem beispielsweise durch eine Zuführung 8 zusätzliche Luft eingespeist wird. So kann hier beispielsweise ein Kompressor oder auch ein Ventilator vorgesehen sein. Ebenfalls kann auch anstelle der Zuführung 8 ein Ventilator vorgesehen sein. Im Falle von Flügeln 12 zur Verstärkung des Luftstroms ist anstelle der Zuführung 8 eine Öffnung, gegebenenfalls mit Luftgleitflächen zur Einleitung des durch die Flügel 12 erzeugten Luftstroms in die Abdeckung 5 vorgesehen. Als Alternative kann auch ein Unterdruck an der Auslassseite der Abdeckung 5 bzw. des Sammelbehälters 4 vorgesehen sein. Ebenso ist eine Kombination aus Überdruck und Unterdruck möglich.

Weiterhin ist es vorteilhaft, in der Abdeckung 5 Platten zur Luftführung 10 vorzusehen, die den Luftstrom in Richtung des Sammelbehälters leiten.

Die Abdeckung 5 umfasst vorteilhafterweise ein Metallblech. Somit kann sie gleichzeitig als elektrische Schirmung eingesetzt werden. Zudem kann durch die metallische Oberfläche eine elektrostatische Aufladung verhindert werden. Es kann aber auch zusätzlich eine
hochohmige, schlecht leitende Oberfläche mit einem Oberflächenwiderstand zwischen einem kOhm und 10 MOhm, beispielsweise als Lack oder in einer anderen Form einer Oberflächenbeschichtung aufgebracht werden. Damit kann eine Kurzschlussgefahr bei Berühren anderer metallischer Teile ausgeschlossen werden. Es wird aber auch das Anziehen von elektrostatischem Staub aus der Luft der Umgebung vermieden. Besonders günstig ist eine solche schlecht leitende Oberfläche auf der Innenseite der Abdeckung 5. Dadurch wird vermieden, dass sich der Staub an der Innenseite der Abdeckung 5 ablagert, bevor er zum Sammelbehälter 4 befördert worden ist. Alternativ kann auch die Abdeckung aus einem Isolationsmaterial, beispielsweise aus Kunststoff gefertigt sein. Auch hier kann wieder eine leitfähige Oberfläche, wie zuvor beschrieben, vorgesehen sein. Der Bürstenblock 3 kann Teil der Abdeckung 5 sein. Alternativ kann er auch durch diese umschlossen werden. Die Innenwände der Abdeckung 5 und die Platten zur Luftführung 10 sollten so ausgelegt sein, dass sie keine scharfen Kanten und Unterschnitte haben, an denen sich Staub ablagern kann. Die Platten zur Luftführung 10 könnten so angeordnet werden, dass sie den Luftstrom von inneren Ecken der Abdeckung 5 wegleiten, so dass sich dort keine Verwirbelungen ergeben. Die inneren Oberflächen der Abdeckung 5, die Platten zur Luftführung 10, der Sammelbehälter 4 und der Träger der Schleifbahnen 11 könnten mit einer abweisenden Oberfläche ausgestattet sein. Dies kann beispielsweise eine Oberfläche mit Lotuseffekt oder anderen Strukturen aus Mikro- und Nanopartikeln sein. Weiterhin kann wenigstens eine Kante oder andere Struktur innerhalb der Abdeckung vorgesehen sein, um einen ' turbulenten Luftstrom zu erzeugen. Solche Turbulenzen können hilfreich sein, um die Schmutzpartikel von einer Oberfläche oder einer Schleifbahn, ihrem Träger oder einem Teil der Bürstenanordnung zu entfernen.

Der Sammelbehälter ist vorzugsweise ein Staubfilter, welches stromabwärts an der Abdeckung 5 angebracht ist. Er könnte ein elektrostatisches Filter oder ein Elektretfilter enthalten. In einer anderen Ausgestaltung der Erfindung kann der Sammelbehälter 4 Material, welches Schmutzpartikel festhält, beispielsweise Gewebe oder Plüsch, enthalten. Weiterhin könnte der Sammelbehälter einen Staubbeutel, wie beispielsweise in Staubsaugern, aufweisen. Der Staubbeutel ist vorzugsweise austauschbar oder in einer austauschbaren Kassette angebracht. Eine solche Kassette kann auf einfache Weise ausgetauscht und/oder gereinigt werden. Zusätzlich kann der Sammelbehälter 4 eine Antihaftbeschichtung aufweisen. Eine Beschichtung umfasst eine Lotuseffekt-Beschichtung und/oder andere Kombinationen mit Mikro- und Nanopartikeln. In einer weiteren Ausgestaltung der Erfindung kann der Sammelbehälter wenigstens eine Leitfläche zur Umleitung des Luftstroms im Inneren des Sammelbehälters aufweisen. Durch diese könnten auch Verwirbelungen erzeugt werden. Hierdurch kann die Ablagerung des Staubs im Inneren des Sammelbehälters verbessert werden.

In einer weiteren Ausgestaltung der Erfindung sind Klappen oder Flügel vorgesehen, um den Luftstrom entsprechend der Drehrichtung umzulenken. Weiterhin kann der Luftstrom, der durch die drehenden Teile verursacht wird, benutzt werden, um Luft in den Sammelbehälter zu blasen oder daraus zu saugen. Vorzugsweise ist die Unterseite des Sammelbehälters zur Aufnahme von Schmutzpartikeln, die aufgrund der Schwerkraft nach unten fallen, ausgebildet. Hier kann eine spezielle Oberfläche zur Aufnahme der Partikel, vorzugsweise aus einem porösen Material, wie beispielsweise Polyurethanschaum, oder aus einem Gewebe oder Plüsch vorgesehen sein.

In einer weiteren Ausgestaltung der Erfindung sind Mittel zur aktiven oder passiven Anpassung der Luftströmung in Abhängigkeit von den Schleifbahnen vorgesehen. Dies kann beispielsweise durch die Anpassung von Flügelklappen oder auch durch Steuerung der Blasrichtung eines Lüfters oder ein weiteres Filter an einer anderen Seite der Abdeckung 5 realisiert sein. Beispielsweise könnten für beide Drehrichtungen an entgegengesetzten Seiten der Abdeckung 5, Filter und/oder Sammelbehälter 4 vorgesehen sein. Entsprechend kann auch durch die Anpassung von Klappen eine Anpassung der Luftströmung an die Umdrehungsgeschwindigkeit und/oder die Drehrichtung erfolgen. Entsprechend kann auch der Luftstrom in oder durch das Filter jeweils abhängig von der Drehrichtung und Drehgeschwindigkeit maximiert werden, um eine optimale Partikelentfernung zu gewährleisten. Andererseits kann auch eine Begrenzung der Strömungsgeschwindigkeit vorgesehen sein, um Strömungsgeräusche bei zu höheren Drehgeschwindigkeiten zu vermeiden. Diese Mittel zur aktiven oder passiven Anpassung der Luftströmung können an beliebiger Stelle im Luftstrom der Anordnung vorgesehen sein.

Die Begriffe stromaufwärts und stromabwärts beziehen sich auf den Luftstrom, der in der Schleifkontaktanordnung durch die Bewegung entsteht. Ein solcher Luftstrom kann durch die Bewegung des Bürstenblocks gegenüber der Schleifbahn und/oder der Umgebung oder auch durch die Bewegung der Schleifbahn gegenüber dem Bürstenblock entstehen. Der Verlauf der Luftströmung ist immer von stromaufwärts nach stromabwärts.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt im Längsschnitt eine Ausführung einer Schleifkontaktanordnung entsprechend der Erfindung.
Fig. 2 zeigt einen Schnitt senkrecht der Linie A-A aus der Fig. 1, von der linken Seite der Anordnung aus Fig. 1 betrachtet.
Fig. 3 zeigt einen Längsschnitt durch eine andere Ausgestaltung einer erfindungsgemäßen Schleifkontaktanordnung.
Fig. 4 zeigt einen Sammelbehälter mit einem turbulenten Luftstrom.

In der Fig. 1 ist ein Ausschnitt einer erfindungsgemäßen Vorrichtung im Schnitt dargestellt. Es sind hier beispielhaft vier Bürsten, die jeweils in einem Köcher 13 aufgenommen sind, vorgesehen. Eine Schleifkontaktanordnung weist mindestens eine Bürste auf. Sie kann jedoch entsprechend dem zu übertragenden Strom auch eine hohe Anzahl an Bürsten, beispielsweise 20 Bürsten aufweisen. Sind mehrere Strompfade oder auch Signalpfade gleichzeitig vorgesehen, so sind die entsprechende Anzahl von Bürsten für jeden Pfad getrennt und laufen auf den ihm zugeordneten Bahnen. Eine typische Schleifkontaktanordnung für Computertomografen kann 50 oder mehr Bürsten umfassen. Die Bürsten sind in einem Bürstenblock 3 zusammengefasst. Ein Bürstenblock nimmt typischerweise die Köcher der Bürsten auf und kontaktiert diese. Es gibt bestimmte Konfigurationen, in denen auch mehrere Bürstenblöcke vorgesehen sind. Dies kann beispielsweise zur Erhöhung der Isolation notwendig sein. Die Bürsten stehen in Schleifkontakt mit wenigstens einer Schleifbahn 2, die auf einem Träger 11 angeordnet ist. In der hier dargestellten Anordnung bewegt sich die Schleifbahn in der durch den Pfeil 6 dargestellten Richtung gegenüber dem feststehenden Bürstenblock. Eine Abdeckung 5 umschließt den gesamten Bürstenblock 3 zusammen mit den Bürsten 1. Die Abdeckung hat Seitenwände, die sich parallel zu den Schleifbahnen 2 und seitlich zum Bürstenblock 3 mit den Bürsten 1 erstrecken. Es wird durch die Abdeckung 5 der Bürstenblock 3 mit den Bürsten 1 sowie wenigstens ein Teil der Schleifbahnen 2, der sich im Eingriff mit den Bürsten 1 befindet, umschlossen. Ein Sammelbehälter 4 für Partikel des abgeriebenen Materials ist stromabwärts vom Bürstenblock 3 an einer Endfläche der Abdeckung 5 vorgesehen.

Die Abdeckung 5 ist als Luftführungskanal ausgelegt, um den Luftstrom, der durch die Bewegung der Schleifbahn 2 entsteht, zu führen. Mit diesem Luftstrom werden die Partikel des Abriebmaterials von den Bürsten 1 entlang der Richtung des Pfeils 7 in den Sammelbehälter geführt.

In Fig. 2 ist ein Schnitt senkrecht zur Darstellung aus Fig. 1 entlang der Linie A-A, betrachtet von der linken Seite, dargestellt. Gezeigt werden drei Schleifbahnen 2, die nebeneinander auf dem Träger 11 angebracht sind. Weiterhin sind drei Bürsten 1 im Eingriff mit den Schleifbahnen 2 dargestellt. Entsprechend der Fig. 1 sind pro Schleifbahn jeweils vier Bürsten hintereinander angeordnet, von denen in Fig. 2 jeweils nur eine sichtbar ist. Die hier dargestellte Anordnung hat somit 12 Bürsten. Die Wände der Abdeckung 5 umschließen den Bürstenhalter 3, zusammen mit den Bürsten 1 in den Köchern 13. Die Abdeckung erstreckt sich bis nahe an den Träger der Schleifbahnen, so dass sie das Segment der Schleifbahnen in der Nähe der Bürsten möglichst gut umschließt.

In Fig. 3 ist eine Darstellung, ähnlich zu derjenigen aus Fig. 1 dargestellt. In dieser Ausführungsform ist an dem stromaufwärts gelegenen Ende der Abdeckung 5 eine Versorgungsleitung 8 vorgesehen, um beispielsweise Pressluft oder ein anderes Gas in die Anordnung einzublasen und somit eine Strömung in Richtung des stromabwärts gelegenen Endes auf der anderen Seite der Abdeckung zu erzeugen. Weiterhin sind noch Luftführungsplatten 10 vorgesehen, um den Luftstrom, wie beispielsweise durch den Pfeil 7 dargestellt, in spezielle Richtungen zu führen oder auch gezielt zu verwirbeln. Diese Führungsplatten sind in jeder anderen Kombination, auch ohne das Zuführungsrohr 8 einsetzbar. Weiterhin sind noch Flügel 12 dargestellt, welche an den Träger 11 der Schleifbahnen 2 angebracht sind, um eine zusätzliche Strömung zu erzeugen. Auch diese Flügel sind mit jeder anderen Ausführung, beispielsweise auch derjenigen aus Fig. 1 kombinierbar.

Fig. 4 zeigt einen Sammelbehälter, in dem die Luft über eine Kante 9 geführt wird, um Turbulenzen zu erzeugen. Im Allgemeinen wird eine Turbulenz hier durch einen Abriss der Strömung entlang einer Fläche am Ende der Fläche erreicht. Die Luft kann nun den Sammelbehälter durch Löcher 14 verlassen, die durch ein weiteres Filter, insbesondere auch durch ein elektrostatisches Filter weiter gefiltert werden kann. Die Turbulenzen im Inneren des Sammelbehälters sorgen dafür, dass im Inneren des Sammelbehälters Staubpartikel aus der Luftströmung ausfallen und dort abgelagert werden. Dieser Effekt kann durch die Schwerkraft günstig beeinflusst werden. Sobald die Staubpartikeln aus dem Hauptluftstrom entfernt sind, reduziert sich die Geschwindigkeit und sie können in Fallen gefangen werden. Diese Fallen weisen entweder selbst Flügel oder Platten, vorzugsweise aus einem porösen Material auf, welches die turbulente Luft abweist um eine weitere Verteilung des Staubs zu verhindern.

## Patentansprüche

1. Schleifkontaktanordnung umfassend
wenigstens eine Schleifbahn (2);
einen Bürstenblock zur Aufnahme wenigstens einer Schleifbürste (13), welche in schleifendem Kontakt mit der wenigstens einen Schleifbahn (2) während einer relativen Bewegung zwischen der Schleifbürste (13) und der wenigstens einen Schleifbahn (2) steht, und
wenigstens einen Sammelbehälter (4) zur Aufnahme von Abriebpartikeln von der wenigstens einen Schleifbürste (13) und/oder der wenigstens einen Schleifbahn (2), wobei
eine Abdeckung (5) vorgesehen ist, welche im Wesentlichen den Bürstenblock (3) und die wenigstens eine Bürste (1) umgibt, wobei die Abdeckung Wände aufweist, die sich wenigstens entlang einer Richtung der Schleifbahn und entlang dem Bürstenhalter erstrecken, wobei die Abdeckung derart ausgebildet ist, dass sie einen Luftstrom, der durch die Bewegung der Schleifbahn gegenüber dem Bürstenblock erzeugt wird, zu dem Sammelbehälter leitet.
**dadurch gekennzeichnet dass**,
die Abdeckung nicht die gesamte Schleifbahn in ihrer Länge, sondern nur ein Segment, welches der Länge des auf der Schleifbahn laufenden Bürstenblocks entspricht, umschliesst, und
der Sammelbehälter stromabwärts bezogen auf den Luftstrom an einer Endfläche der Abdeckung (5) angebracht ist.

2. Schleifkontaktanordnung nach Anspruch 1,
**dadurch gekennzeichnet dass**,
Mittel zur Erzeugung eines Überdrucks an einem stromaufwärts, bezogen auf den Luftstrom, angeordneten Ende des Sammelbehältern (4) vorgesehen sind.

3. Schleifkontaktanordnung nach Anspruch 1,
**dadurch gekennzeichnet dass**,
Mittel zur Erzeugung eines Unterdrucks in dem Sammelbehälter (4) vorgesehen sind.

4. Schleifkontaktanordnung nach einem der vorhergehenden Ansprüche,
**dadurch gekennzeichnet dass**,
ein Gebläse oder Ventilator an dem stromaufwärts, bezogen auf den Luftstrom, liegenden Ende der Abdeckung vorgesehen ist, um einen zusätzlichen Luftstrom durch die Abdeckung von dem stromaufwärts gelegenen Ende zum stromabwärts gelegenen Ende zu erzeugen.

5. Schleifkontaktanordnung nach einem der vorhergehenden Ansprüche,
**dadurch gekennzeichnet dass**,
wenigstens eine Luftführungsplatte (10) vorgesehen ist, die innerhalb der Abdeckung (5) den Luftstrom in eine Richtung zu dem Sammelbehälter (4) leitet.

6. Schleifkontaktanordnung nach einem der vorhergehenden Ansprüche,
**dadurch gekennzeichnet dass**,
der Sammelbehälter (4) ein Staubfilter umfasst, welches auf der stromabwärts liegenden Seite, bezogen auf den Luftstrom der Abdeckung (5) angebracht werden kann.

7. Schleifkontaktanordnung nach Anspruch 6,
**dadurch gekennzeichnet dass**,
der Sammelbehälter (4) ein elektrostatisches Staubfilter umfasst.

8. Schleifkontaktanordnung nach Anspruch 6,
**dadurch gekennzeichnet dass**,
der Sammelbehälter (4) ein Elektretfilter umfasst.

9. Schleifkontaktanordnung nach einem der vorhergehenden Ansprüche,
**dadurch gekennzeichnet dass**,
der Sammelbehälter (4) einen Staubbeutel entsprechend einem Staubbeutel bei Staubsaugern umfasst.

10. Schleifkontaktanordnung nach einem der vorhergehenden Ansprüche,
**dadurch gekennzeichnet dass**,
der Sammelbehälter (4) einen austauschbaren Staubsammelbehälter umfasst.

11. Schleifkontaktanordnung nach einem der vorhergehenden Ansprüche,
**dadurch gekennzeichnet dass**,
wenigstens eine der Innenflächen der Abdeckung (5), Luftführungsplatten (10), Sammelbehälter (4) und der Träger (11) der Schleifbahnen mit einer schmutzabweisenden Oberfläche wie aus Mikro- und Nanopartikeln versehen ist.

12. Schleifkontaktanordnung nach einem der vorhergehenden Ansprüche,
**dadurch gekennzeichnet dass**,
wenigstens eine der Innenflächen der Abdeckung (5), Luftführungsplatten (10), Sammelbehälter (4) und der Träger (11) der Schleifbahnen mit einer Oberflächenbeschichtung versehen ist, die elektrostatische Aufladung verhindert.

13. Schleifkontaktanordnung nach einem der vorhergehenden Ansprüche,
**dadurch gekennzeichnet dass**,
der Sammelbehälter (4) Mittel zu Erzeugung eines turbulenten Luftstroms umfasst, welche den Luftstrom veranlassen, abgeriebene Partikel in den Sammelbehälter abzugeben.

14. Schleifkontaktanordnung nach einem der vorhergehenden Ansprüche,
**dadurch gekennzeichnet dass**,
der Sammelbehälter (4) Mittel zur Erzeugung von Turbulenzen durch einen Strömungsabriss eines Luftstroms entlang eines Flügels an dem Ende des Flügels aufweist, so dass der Luftstrom abgeriebene Partikel in den Sammelbehälter abgibt.

15. Schleifkontaktanordnung nach einem der vorhergehenden Ansprüche,
**dadurch gekennzeichnet dass**,
der Luftstrom aktiv oder passiv in Abhängigkeit von Richtung und/oder Geschwindigkeit der Schleifbahn gegenüber dem Bürstenblock durch aktive oder passive Anpassung von Flügeln, Klappen, der Strömungsrichtung eines Ventilators oder ein zusätzliches Filter angepasst wird.

16. Schleifkontaktanordnung nach einem der vorhergehenden Ansprüche,
**dadurch gekennzeichnet dass**,
Mittel wie zum Beispiel Flügel in vorgegebenen Abständen entlang des Trägers (11) der Schleifbahn vorgesehen sind, um den Luftstrom durch die Abdeckung (5) zu verwirbeln.

## Claims

1. Sliding contact assembly comprising
at least one slide track (2);
a brush block for accommodating at least one sliding brush (13) which is in sliding contact with the at least one slide track (2) during a relative movement between the sliding brush (13) and the at least one slide track (2), and
at least one collecting container (4) for accommodating abraded material particles from the at least one sliding brush (13) and/or the at least one slide track (2), wherein
a cover (5) is provided which substantially encloses the brush block (3) and the at least one brush (1), with the cover comprising walls extending at least along a direction of the slide track and along the brush holder, wherein
the cover is designed so that it guides an air stream generated by the movement of the slide track relative to the brush block to the collecting container,
**characterized in that**
the cover does not enclose the whole slide track in its total length, but it encloses only a segment which corresponds to the length of the brush block sliding on the slide track, and the collecting container is mounted at an end face of the cover (5) downstream with reference to the air stream.

2. Sliding contact assembly according to claim 1,
**characterized in that**
means for generating an excess pressure are provided on an end, disposed upstream with reference to the air stream, of the collecting container (4).

3. Sliding contact assembly according to claim 1,
**characterized in that**
means for generating a sub-pressure are provided in the collecting container (4).

4. Sliding contact assembly according to any one of the preceding claims,
**characterized in that**
a blower or fan is provided on an end, disposed upstream with reference to the air stream, of the cover to generate an additional air stream through the cover from the upstream end to the downstream end.

5. Sliding contact assembly according to any one of the preceding claims,
**characterized in that**
at least one air-guiding plate (10) is provided for guiding the air stream inside the cover (5) in a direction towards the collecting container (4).

6. Sliding contact assembly according to any one of the preceding claims,
**characterized in that**
the collecting container (4) comprises a dust filter which can be mounted on the downstream side, with reference to the air stream, of the cover (5).

7. Sliding contact assembly according to claim 6,
**characterized in that**
the collecting container (4) comprises an electrostatic dust filter.

8. Sliding contact assembly according to claim 6,
**characterized in that**
the collecting container (4) comprises an electret filter.

9. Sliding contact assembly according to any one of the preceding claims,
**characterized in that**
the collecting container (4) comprises a dust bag corresponding to a dust bag of a vacuum cleaner.

10. Sliding contact assembly according to any one of the preceding claims,
**characterized in that**
the collecting container (4) comprises an exchangeable dust-collecting container.

11. Sliding contact assembly according to any one of the preceding claims,
**characterized in that**
at least one of the inside surfaces of the cover (5), the air-guiding plates (10), the collecting container (4), and the support (11) of the slide tracks is provided with a dirt-repelling surface such as a surface of micro- and nano-particles.

12. Sliding contact assembly according to any one of the preceding claims,
**characterized in that**
at least one of the inside surfaces of the cover (5), the air-guiding plates (10), the collecting container (4), and the support (11) of the slide tracks is provided with a surface coating which prevents electrostatic charging.

13. Sliding contact assembly according to any one of the preceding claims,
**characterized in that**
the collecting container (4) comprises means for generating a turbulent air stream which causes the air stream to release abraded particles into the collecting container.

14. Sliding contact assembly according to any one of the preceding claims,
**characterized in that**
the collecting container (4) comprises means for generating turbulence by a stall in an air stream passing along a vane at the end of the vane, so that the air stream releases abraded particles into the collecting container.

15. Sliding contact assembly according to any one of the preceding claims,
**characterized in that**
the air stream is actively or passively adapted in dependence upon the direction and/or speed of the slide track relative to the brush block, by an active or passive adaptation of vanes, flaps, a blowing direction of a fan, or an additional filter.

16. Sliding contact assembly according to any one of the preceding claims,
**characterized in that**
means such as vanes, for example, are provided at given spacing from each other along the support (11) of the slide track, in order to cause turbulence of the air stream through the cover (5).

## Revendications

1. Dispositif de contact frotteur comprenant
au moins une piste de frottement (2) ;
un bloc porte-balai destiné à recevoir au moins un balai frotteur (13) qui se trouve en contact par frottement avec l'au moins une piste de frottement (2) pendant un mouvement relatif entre le balai frotteur (13) et l'au moins une piste de frottement (2), et
au moins un récipient collecteur (4) destiné à recevoir les particules d'abrasion de l'au moins un balai frotteur (13) et/ou de l'au moins une piste de frottement (2), dans lequel il est prévu une couverture (5) qui entoure pour l'essentiel le bloc porte-balai (3) et l'au moins un balai (1), laquelle couverture présente des parois qui s'étendent au moins le long d'une direction de la piste de frottement et le long du porte-balai, la couverture étant conformée de telle manière qu'elle guide vers le récipient collecteur un flux d'air produit par le mouvement de la piste de frottement par rapport au bloc porte-balai,
**caractérisé en ce que** la couverture n'entoure pas toute la longueur de la piste de frottement mais seulement un segment qui correspond à la longueur du bloc porte-balai passant sur la piste de frottement, et
le récipient collecteur est disposé en aval par rapport au flux d'air sur une surface d'extrémité de la couverture (5).

2. Dispositif de contact frotteur selon la revendication 1, **caractérisé en ce que** des moyens sont prévus pour produire une surpression à une extrémité du récipient collecteur (4) située en amont par rapport au flux d'air.

3. Dispositif de contact frotteur selon la revendication 1, **caractérisé en ce que** des moyens sont prévus pour produire une dépression dans le récipient collecteur (4).

4. Dispositif de contact frotteur selon l'une des revendications précédentes, **caractérisé en ce qu'**une soufflerie ou un ventilateur est prévu à l'extrémité de la couverture située en amont par rapport au flux d'air afin de produire un flux d'air supplémentaire à travers la couverture, de l'extrémité située en amont à l'extrémité située en aval.

5. Dispositif de contact frotteur selon l'une des revendications précédentes, **caractérisé en ce qu'**il est prévu au moins une plaque de déflection d'air (10) qui guide le flux d'air à l'intérieur de la couverture (5) en direction du récipient collecteur (4).

6. Dispositif de contact frotteur selon l'une des revendications précédentes, **caractérisé en ce que** le récipient collecteur (4) comprend un filtre à poussière qui peut être disposé sur le côté de la couverture (5) situé en aval par rapport au flux d'air.

7. Dispositif de contact frotteur selon la revendication 6, **caractérisé en ce que** le récipient collecteur (4) comprend un filtre à poussière électrostatique.

8. Dispositif de contact frotteur selon la revendication 6, **caractérisé en ce que** le récipient collecteur (4) comprend un filtre à électret.

9. Dispositif de contact frotteur selon l'une des revendications précédentes, **caractérisé en ce que** le récipient collecteur (4) comprend un sac à poussière semblable à un sac à poussière d'aspirateur.

10. Dispositif de contact frotteur selon l'une des revendications précédentes, **caractérisé en ce que** le der récipient collecteur (4) comprend un collecteur de poussière interchangeable.

11. Dispositif de contact frotteur selon l'une des revendications précédentes, **caractérisé en ce qu'**au moins un parmi les surfaces intérieures de la couverture (5), les plaques de déflection d'air (10), le récipient collecteur (4) et le support (11) des pistes de frottement est muni d'une surface repoussant la poussière, par exemple faite de micro- ou nanoparticules.

12. Dispositif de contact frotteur selon l'une des revendications précédentes, **caractérisé en ce qu'**au moins un parmi les surfaces intérieures de la couverture (5), les plaques de déflection d'air (10), le récipient collecteur (4) et le support (11) des pistes de frottement est muni d'un revêtement de surface qui empêche la constitution d'une charge électrostatique.

13. Dispositif de contact frotteur selon l'une des revendications précédentes, **caractérisé en ce que** le récipient collecteur (4) comprend des moyens pour produire un flux d'air turbulent, qui forcent le flux d'air à déposer les particules enlevées par l'abrasion dans le récipient collecteur.

14. Dispositif de contact frotteur selon l'une des revendications précédentes, **caractérisé en ce que** le récipient collecteur (4) comprend des moyens pour produire des turbulences par un décollement de filets d'un flux d'air parcourant une ailette à l'extrémité de l'ailette, de telle sorte que le flux d'air dépose les particules enlevées par l'abrasion dans le récipient collecteur.

15. Dispositif de contact frotteur selon l'une des revendications précédentes, **caractérisé en ce que** le flux d'air est adapté activement ou passivement en fonction de la direction et/ou de la vitesse de la piste de frottement par rapport au bloc porte-balai par une adaptation active ou passive d'ailettes, de clapets, du sens de circulation d'un ventilateur, ou par un filtre supplémentaire.

16. Dispositif de contact frotteur selon l'une des revendications précédentes, **caractérisé en ce que** des moyens sont prévus, par exemple des ailettes à des intervalles prédéterminés le long du support (11) de la piste de frottement, pour faire tourbillonner le flux d'air à travers la couverture (5).
